# EUROPEAN PATENT SPECIFICATION

(11) **EP 0 808 872 B1**
(45) Date of publication and mention of the grant of the patent: **22.03.2000**
(21) Application number: 97114690.7
(22) Date of filing: 16.01.1992
(51) Int. Cl.: C08L 33/06

(54) **Thermoplastic resin composition**
Thermoplastische Harzzusammensetzung
Composition de résine thermoplastique

(30) Priority: 16.01.1991 JP 317891; 17.12.1991 JP 33372191
(43) Date of publication of application: 26.11.1997
(62) Divisional of application: 92300384.2
(73) Proprietor: MITSUI CHEMICALS, INC., Tokyo (JP)
(72) Inventor: Yamamoto, Yohzoh, Waki-cho, Kuga-gun, Yamaguchi 740 (JP)
(74) Representative: Cresswell, Thomas Anthony

(56) References cited:
- EP-A- 0 264 645
- FR-A- 1 568 560
- FR-A- 2 332 300
- PATENT ABSTRACTS OF JAPAN vol. 013, no. 049 (C-565), 3 February 1989 & JP 63 243108 A (JAPAN SYNTHETIC RUBBER CO LTD), 11 October 1988,
- PATENT ABSTRACTS OF JAPAN vol. 015, no. 252 (C-0844), 26 June 1991 & JP 03 081353 A (MITSUI PETROCHEM IND LTD), 5 April 1991,

## Description

### FIELD OF THE INVENTION

The present invention relates to a novel thermoplastic resin composition, and more in detail to a thermoplastic resin composition comprising a polymer comprising recurring units derived from a polycyclic (meth)acrylate and an elastomer.

### BACKGROUND OF THE INVENTION

Amorphous resins such as polyester resins, ABS resins and modified PPO resins are excellent in characteristics such as rigidity, dimension accuracy and heat resistance, and accordingly have heretofore been widely used for, for example in automobile parts, electrical appliances, office automation instruments and miscellaneous goods.

However, thermoplastic resins used for products as mentioned above have recently been increasingly employed under severe conditions such as at high temperature. The severe quality is required for the thermoplastic resins used under such severe conditions depending upon the conditions of use. Few of the conventionally used amorphous resins as described above satisfy such requirements, and therefore the realization of thermoplastic resins having still higher quality has been desired.

FR-A-2 332 300 describes a hot-melt adhesive comprising an addition copolymer of at least one C₁ to C₁₈ alkyl acrylate or alkoxyalkyl acrylate and an ethylenically unsaturated amine, carboxylic acid and/or sulphonic acid, and an addition copolymer of CH₂ = C (R) CO₂R¹ and at least one ethylenically unsaturated amine, carboxylic acid and/or sulphonic acid.

FR-A-1 568 560 describes a vinyl chloride resin composition comprising a vinyl chloride polymer containing at least 80% of vinyl chloride monomers, and a rubbery thermoplastic copolymer containing methyl methacrylate monomers and bicyclic methacrylate monomers.

JP-A-63 243 108 describes an optical material comprising the polymerisation product of two alternative pentacyclic acrylate monomers optionally with comonomers.

### OBJECT OF THE INVENTION

The present invention has been accomplished in view of the prior art techniques as describes above, and an object or the invention is to provide a thermoplastic resin composition excellent in characteristics such as heat resistance, rigidity, dimension accuracy, impact resistance and light resistance.

### SUMMARY OF THE INVENTION

The present invention provides a thermoplastic resin composition comprising: (a) a polymer comprising recurring units derived from a polycyclic (meth)acrylate represented by formula [I] 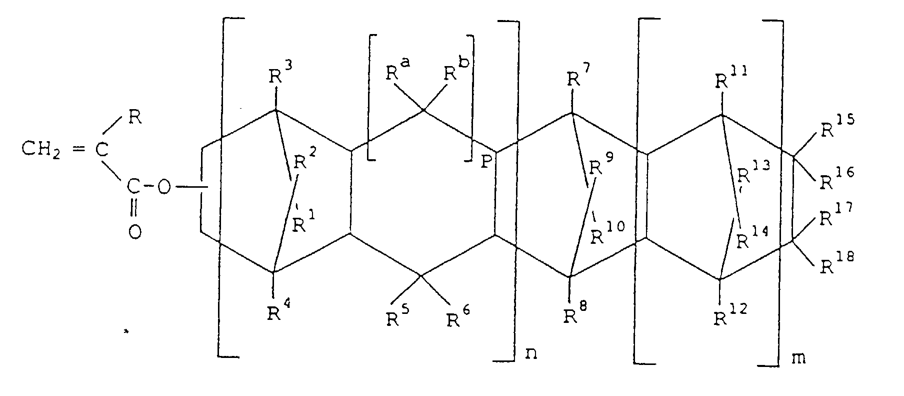 wherein m is 0 or a positive integer; n is 0 or 1; R is hydrogen or methyl; R¹-R¹⁸ are each independently hydrogen, halogen or hydrocarbon; R¹⁵-R¹⁸, may be linked together to form a monocyclic or polycyclic group which may have a double bond; R¹⁵ and R¹⁶, or R¹⁷ and R¹⁸, may form an alkylidene group; p is 0 or 1, and when p is 1 R^{a} and R^{b} are each independently hydrogen or hydrocarbon; and (b) an elastomer having a glass transition temperature (Tg) of not higher than 0°C, an intrinsic viscosity (η) as measured in decalin at 135°C of 0.01 to 10 dl/g, and a crystallinity index as measured by X-ray diffraction of 0 to 10%, which is (ii) an α-olefin polymer comprising recurring units from at least 2 α-olefins, and/or (b') an elastomer which is a graft modified copolymer of (ii); in a weight ratio of (a):((b) + (b')) of 99 : 1 to 40:60.

The thermoplastic resin composition of the invention is excellent in characteristics such as rigidity, dimension accuracy, impact resistance and light resistance. Accordingly, molded articles excellent in characteristics such as heat resistance, rigidity, impact resistance and light resistance can be prepared from the resin composition of the invention.

### DETAILED DESCRIPTION OF THE INVENTION

The thermoplastic resin composition according to the present invention is concretely illustrated hereinafter.

The thermoplastic resin composition of the invention comprises a polymer comprising recurring units derived from a specific polycyclic (meth)acrylate and an elastomer.

The polymer comprising recurring units derived from a specific polycyclic (meth)acrylate may be a copolymer of polycylic (meth)acrylate(s), or a copolymer of a polycyclic (meth)acrylate and other copolymerizable monomers.

### POLYCYCLIC (METH)ACRYLATE

Firstly, the polycyclic (meth)acrylate is illustrated.

The polycyclic (meth)acrylate can be represented by the formula [I]

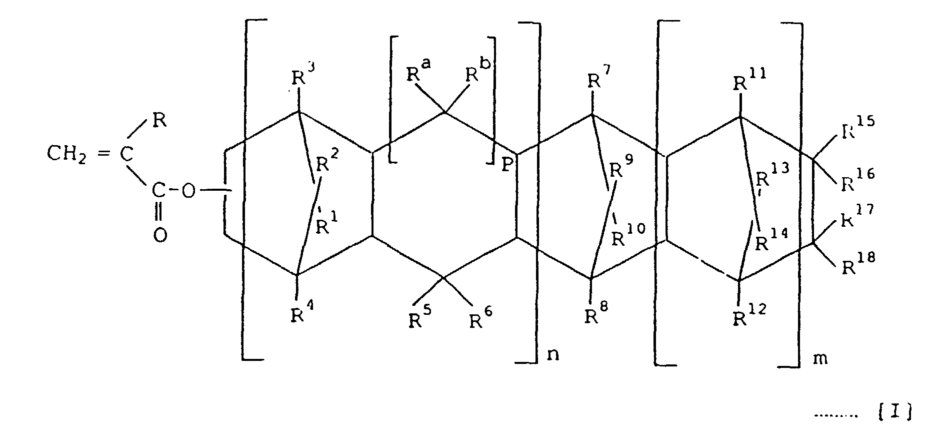

In the aforementioned formula [I], m is 0 or a positive integer, and n is 0 or 1.

Moreover, R is hydrogen or methyl. That is, of compounds represented by the above-mentioned formula [I], those having a hydrogen atom as R are acrylate compounds, and those having a methyl group as R are methacrylate compounds. These acrylate compounds and methacrylate compounds can both be used in the present invention.

Furthermore, R¹-R¹⁸ are each independently an atom or a group selected from the group consisting of hydrogen, halogen and hydrocarbon groups. R^{a} and R^{b} are each independently hydrogen or a hydrocarbon group. The hydrocarbon groups usually have 1 to 15 carbon atoms, preferably 1 to 10 carbon atoms, and are linear or branched. Concrete examples of the hydrocarbon group include aliphatic hydrocarbon groups such as methyl, ethyl, propyl, n-butyl, isobutyl, tert-butyl, pentyl, hexyl, heptyl, octyl, nonyl and decyl; alicyclic hydrocarbon groups such as cyclohexyl; and aromatic hydrocarbon groups such as phenyl, benzyl, tolyl, ethylphenyl, isopropylphenyl, α-naphthyl and anthracenyl. Examples of the halogen include fluorine, chlorine, bromine and iodine. R¹-R¹⁸ are not required to be the same, and may, of course, be groups or atoms different from each other.

Still furthermore, R¹⁵-R¹⁸, linked together, may form a monocyclic or polycyclic group. For example, R¹⁵ and R¹⁷, linked together, may form as a whole, a cyclopentyl or cyclohexyl ring, or a ring structure in which a plural number of such rings are bonded together. The monocyclic or polycyclic group may have a double bond in the ring.

Moreover, R¹⁵ and R¹⁶, or R¹⁷ and R¹⁸ may form an alkylidene group such as ethylidene and propylidene.

Furthermore, p represents 0 or 1 in the formula [I]. R^{a} and R^{b} each independently represent a hydrogen atom or a hydrocarbon group when p is 1, and when p is 0, the corresponding two carbons are bonded together to form a 5-membered ring.

Concrete examples of the polycyclic (meth)acrylate represented by the aforementioned formula [I] include the compounds described below.

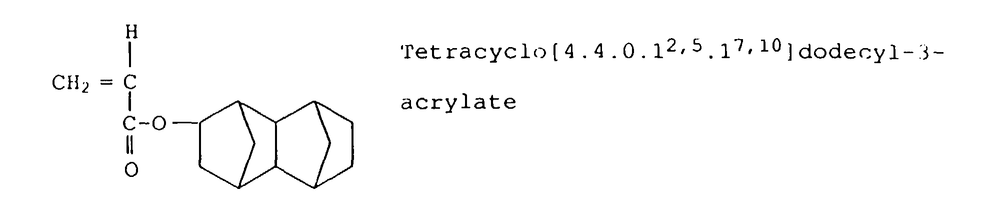

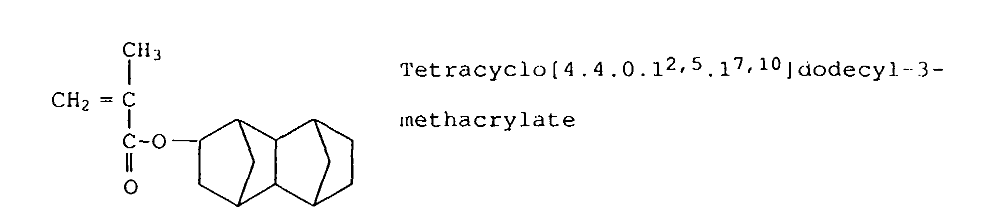

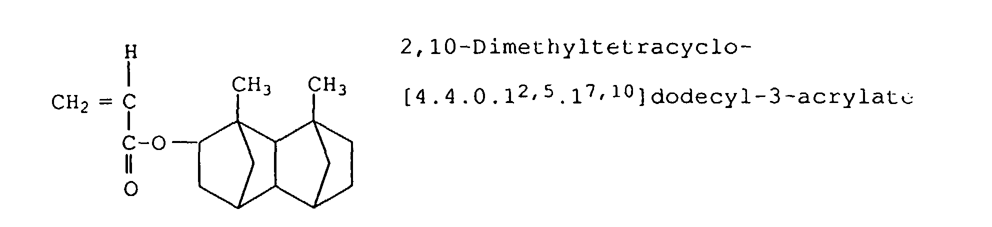

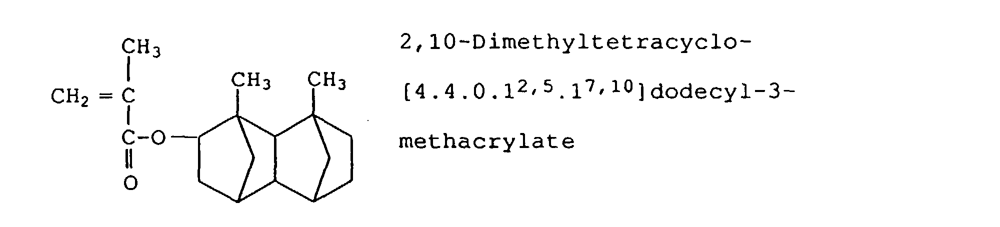

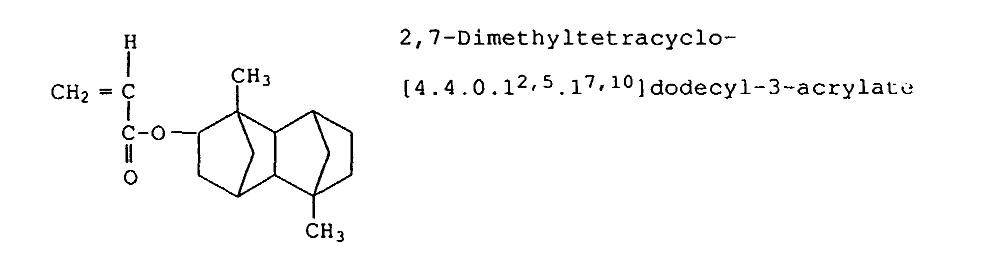

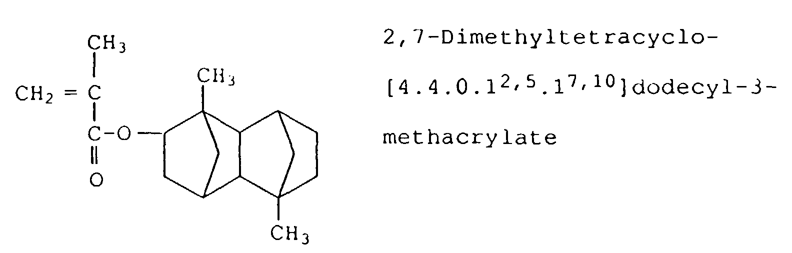

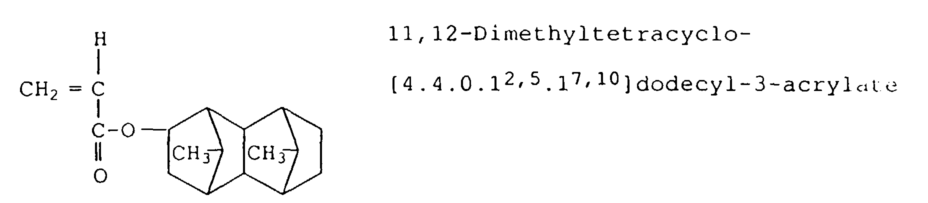

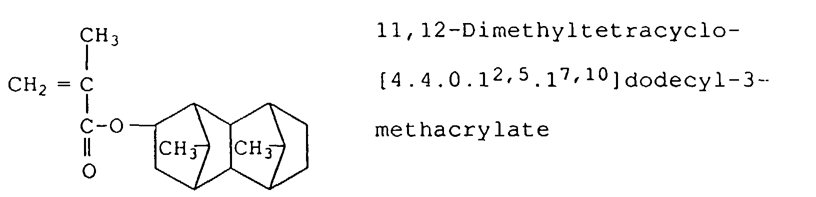

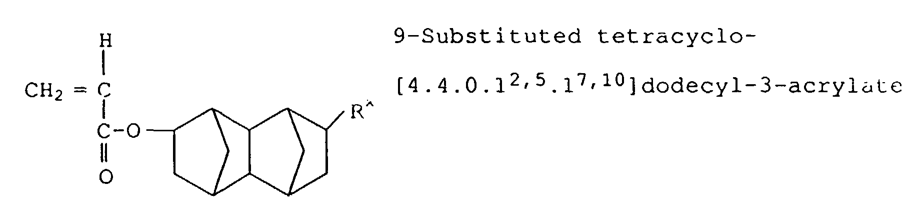

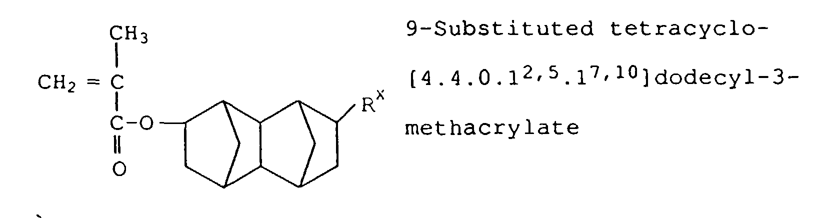

In the above-mentioned two formulas, R^{x} represents an aliphatic hydrocarbon group such as methyl, ethyl, propyl, isobutyl, hexyl and stearyl, an alicyclic hydrocarbon group such as cyclohexyl, or a halogen atom such as a bromine atom and a fluorine atom.

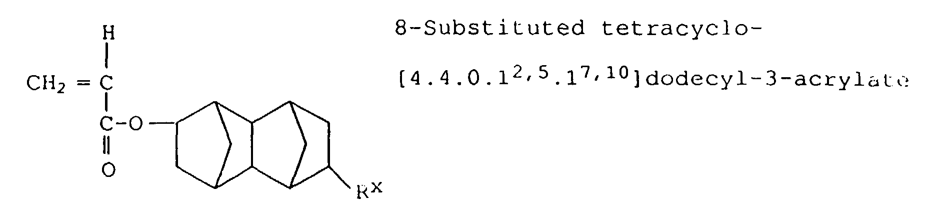

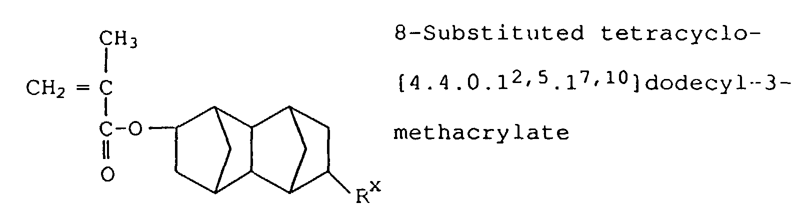

In the above-mentioned two formulas, R^{X} represents an aliphatic hydrocarbon group such as methyl, ethyl, propyl, isobutyl, hexyl and stearyl, an alicyclic hydrocarbon group such as cyclohexyl, or a halogen atom such as a bromine atom and a fluorine atom.

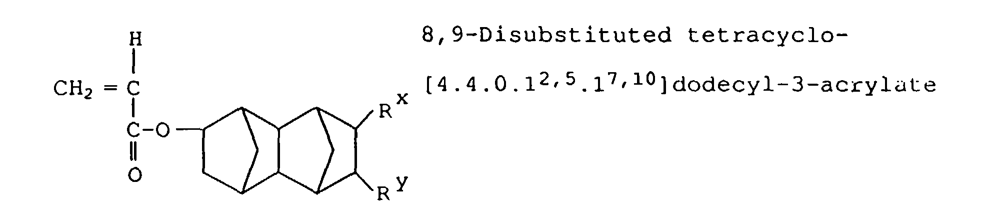

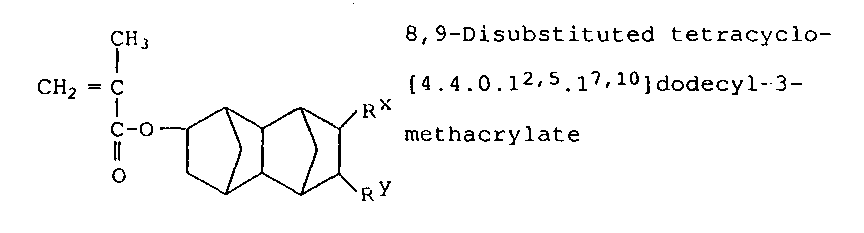

In the above-mentioned two formulas, R^{X}and R^{Y} each independently represent an aliphatic hydrocarbon group such as methyl, ethyl, propyl, isobutyl, hexyl and stearyl, an alicyclic hydrocarbon group such as cyclohexyl, or a halogen atom such as a bromine atom and a fluorine atom.

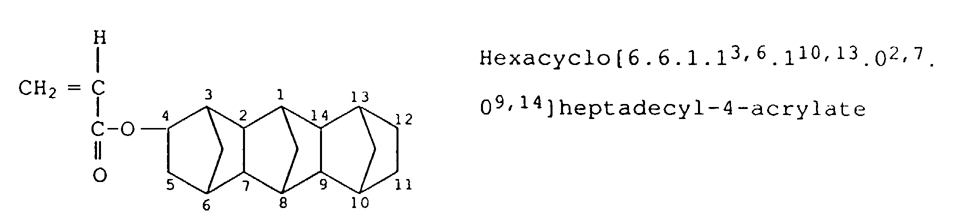

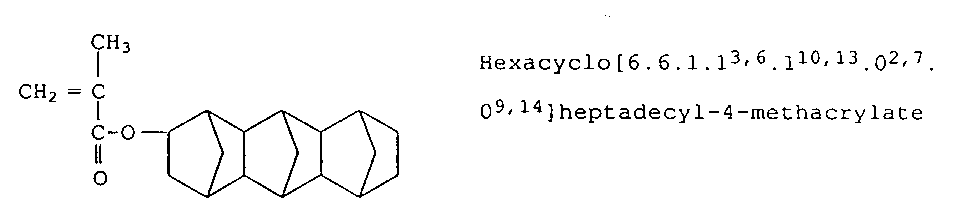

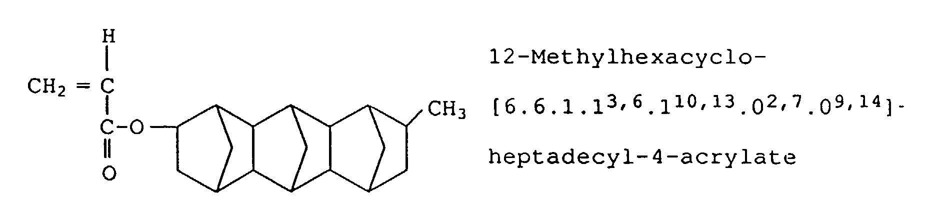

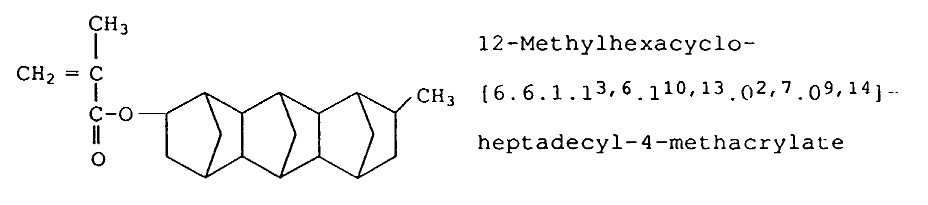

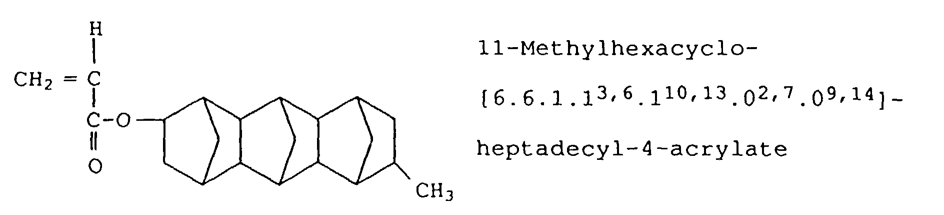

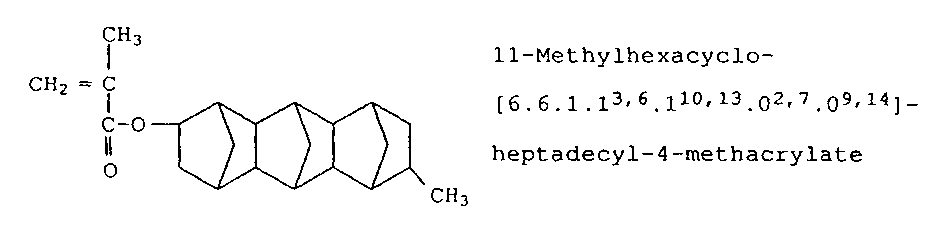

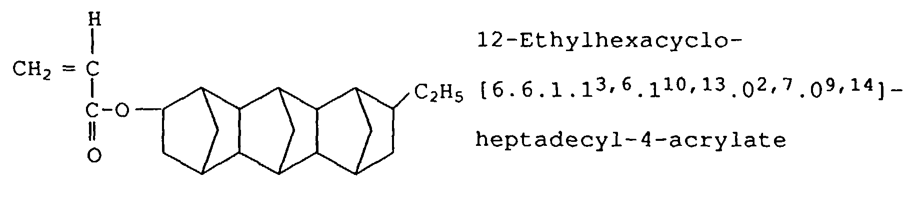

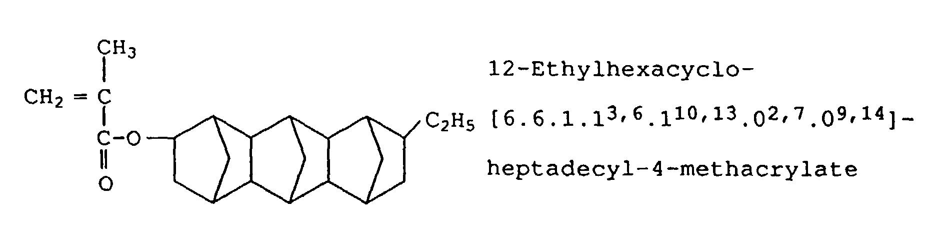

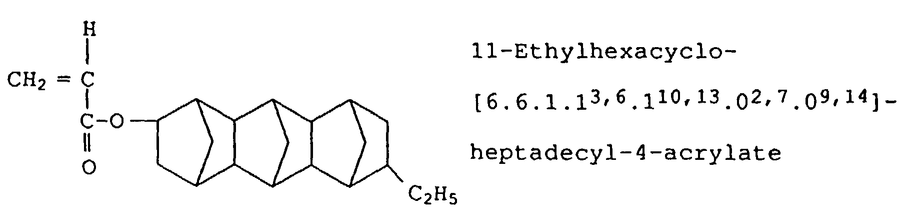

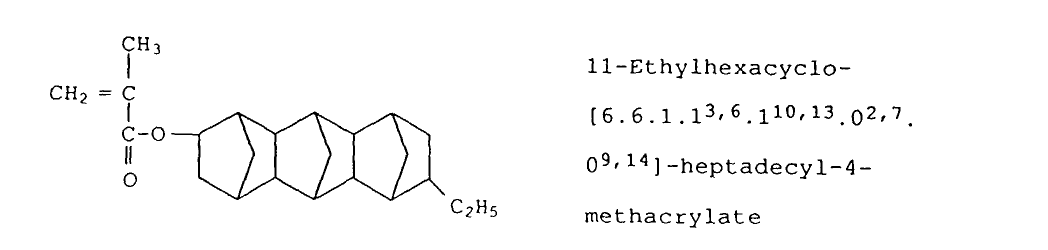

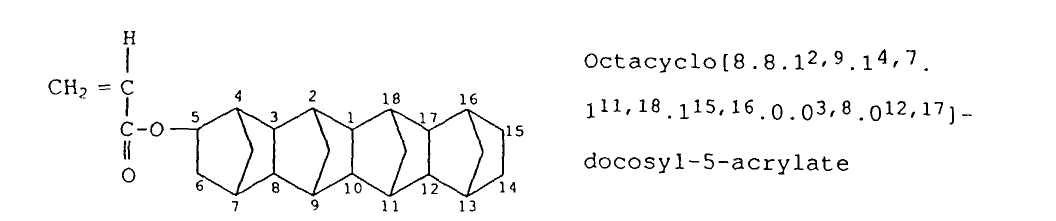

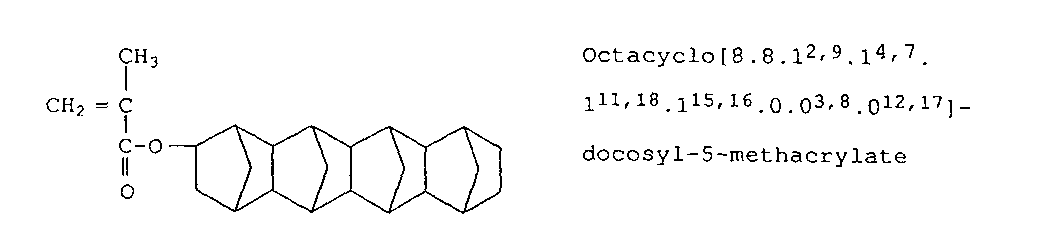

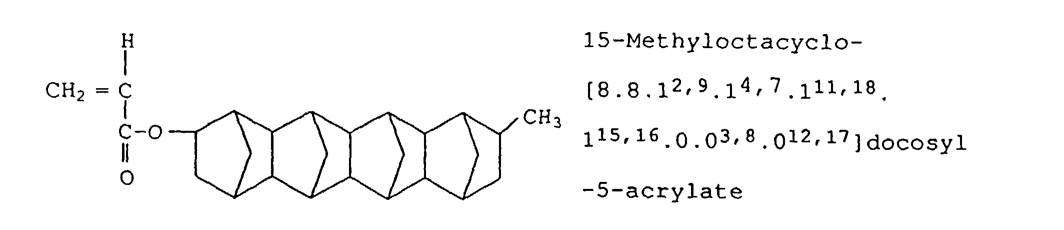

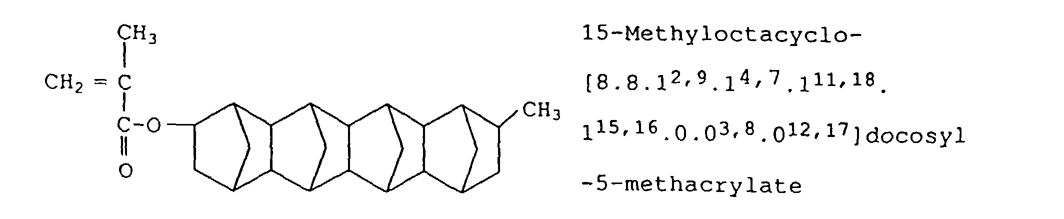

Examples of the polycyclic (meth)acrylate in which R¹⁵-R¹⁸ together form a single ring group represented by the aforoementioned formula [I] include the compounds described below.

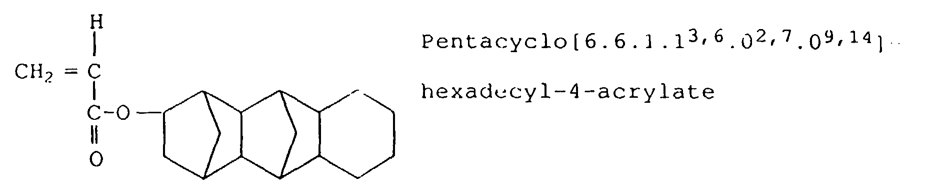

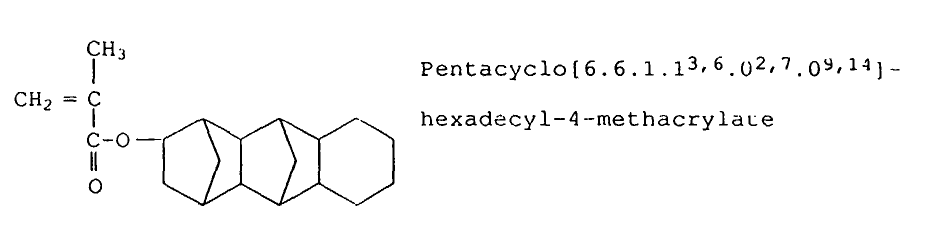

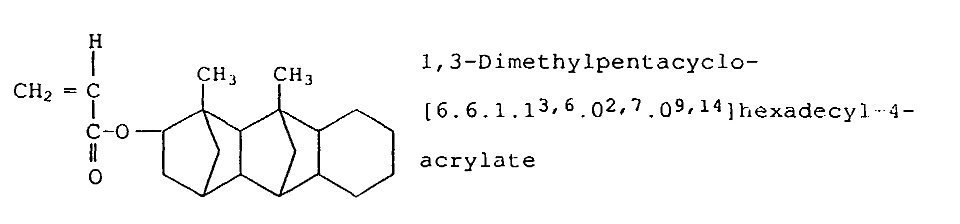

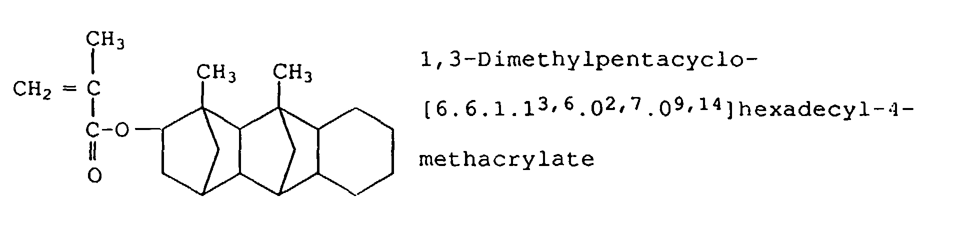

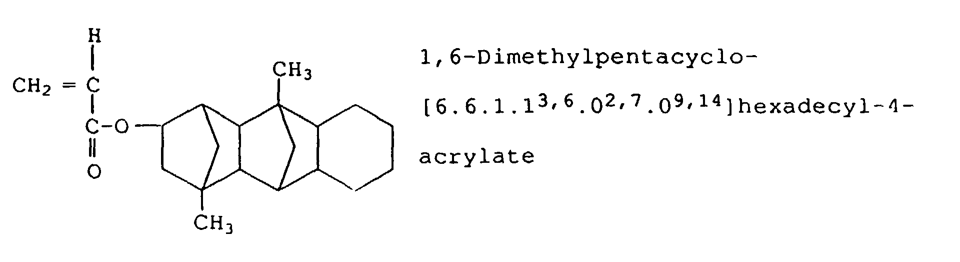

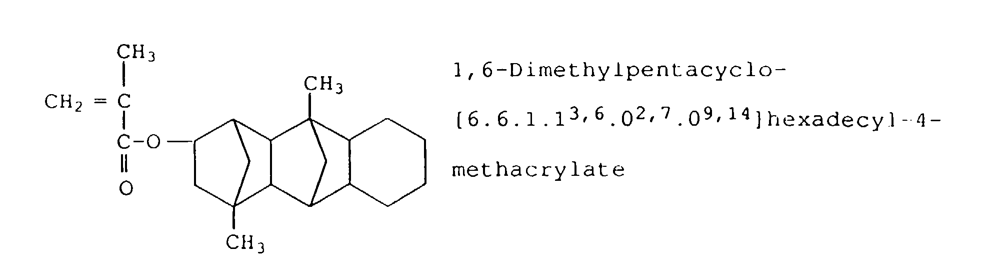

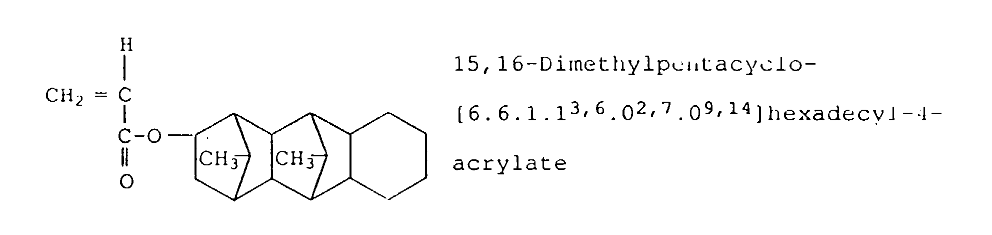

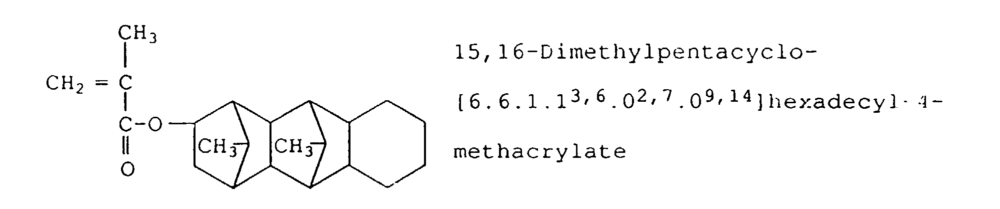

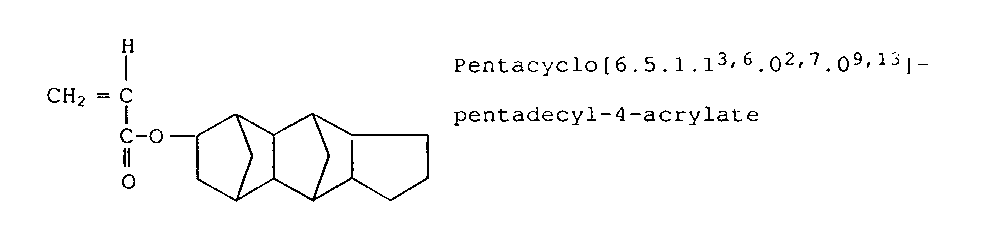

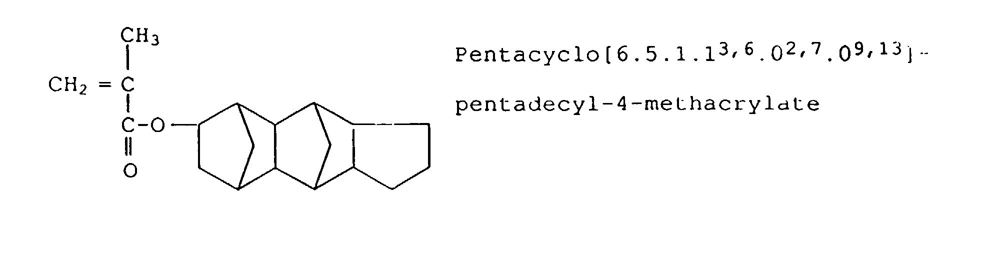

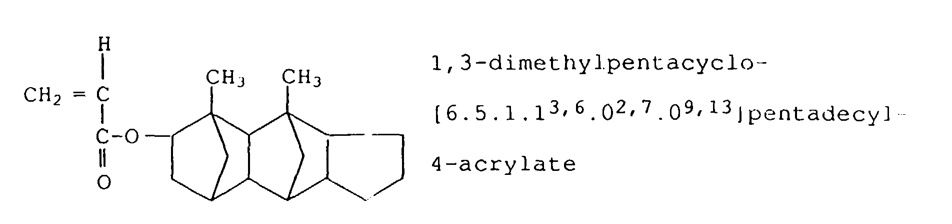

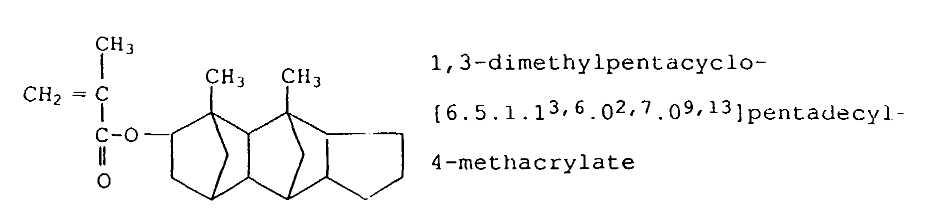

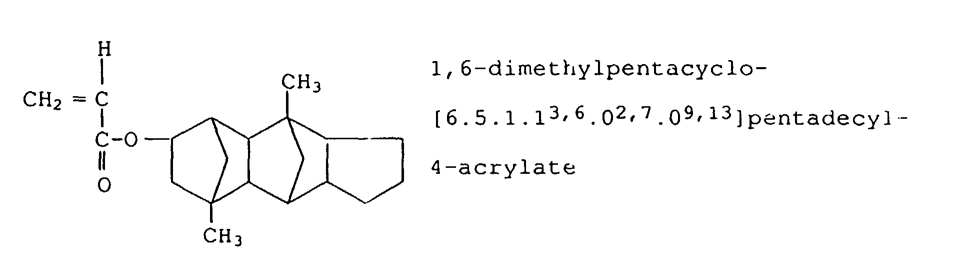

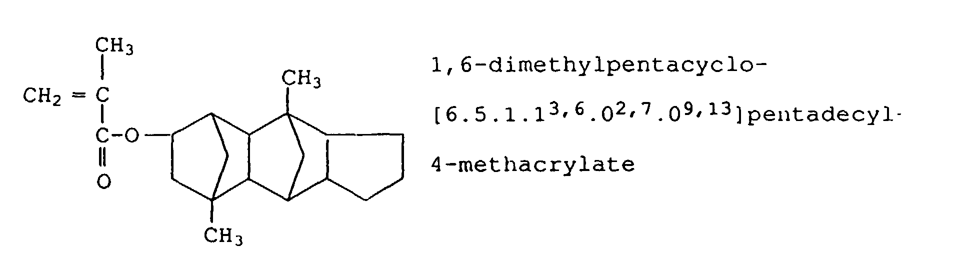

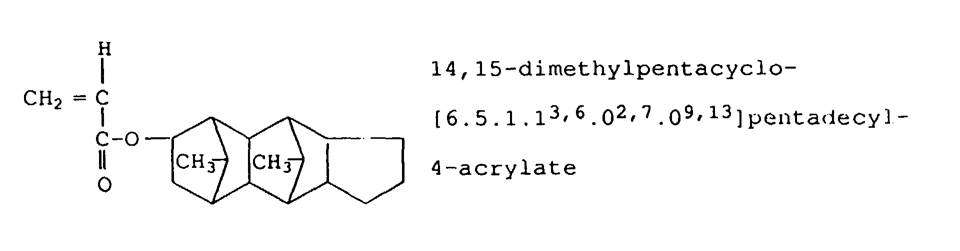

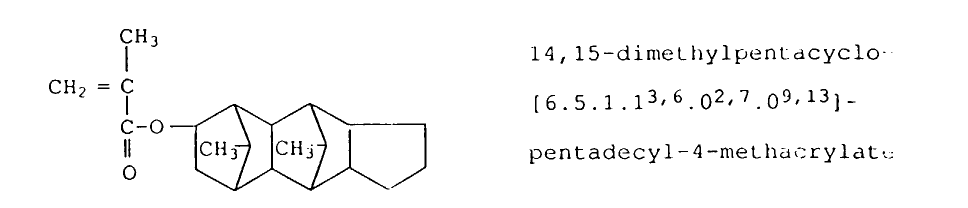

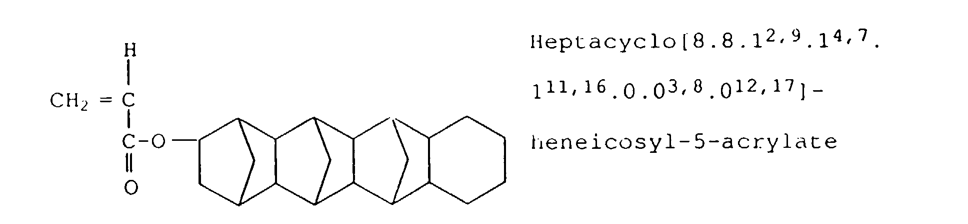

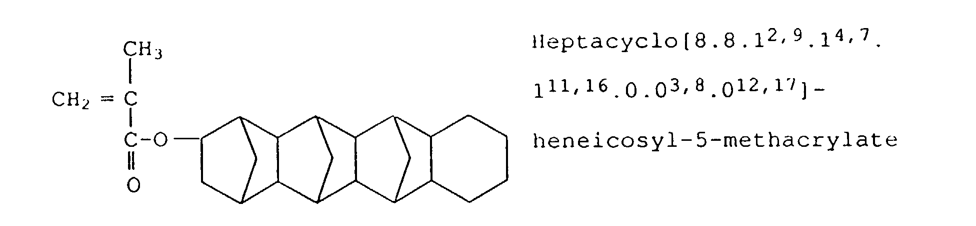

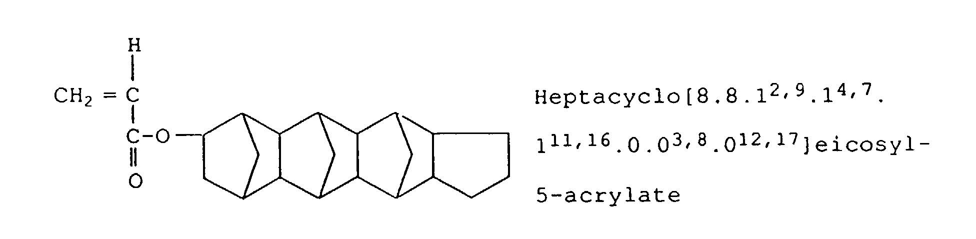

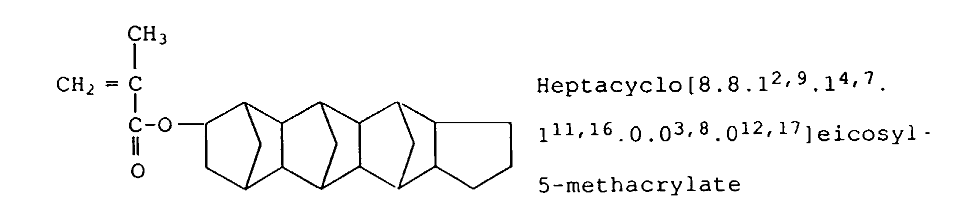

The polycyclic (meth)acrylates as mentioned above can be prepared, for example, by reacting a polycyclic alcohol, which has been prepared by reacting a cycloolefin having a structure corresponding to the polycyclic (meth)acrylate represented by the aforementioned formula [I] with formic acid, with a (meth)acrylic acid derivative including acrylic acid or methacrylic acid, or a (meth)acrylyl halide such as an acrylyl halide or a methacrylyl halide.

The cycloolefin having a structure corresponding to that of the polycyclic (meth)acrylate used in this method can be represented by the following formula [II] 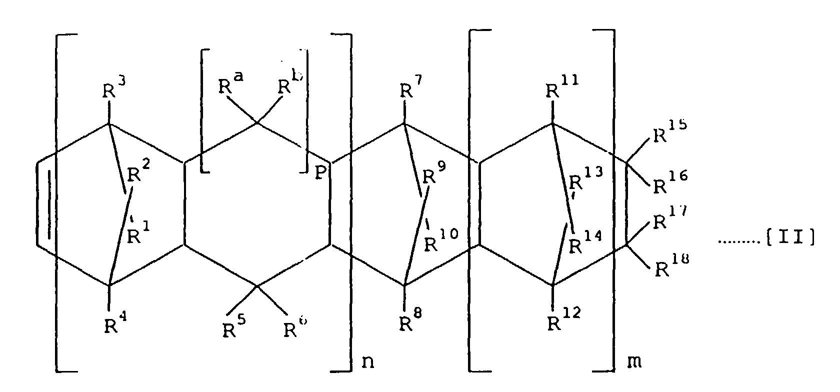 wherein R¹-R¹⁸, R^{a}, R^{b}, and m, n and p are as defined in the aforementioned formula [I].

### POLYCYCLIC (METH)ACRYLATE (CO)POLYMER

The polymer used in the thermoplastic resin composition of the invention comprising the recurring units derived from a polycyclic (meth)acrylate may be a homopolymer of the polycyclic (meth)acrylate as mentioned above. The polymer may also be a copolymer of the polycyclic (meth)acrylates, which are different from each other, as mentioned above. The polymer may also be a copolymer of the polycyclic (meth)acrylate as mentioned above and other copolymerizable monomers. In the present invention, the term "polycyclic (meth)acrylate (co)polymer" generally refers to these (co)polymers unless otherwise noted.

These other monomers to be copolymerized with the polycyclic (meth)acrylate include compounds having at least one polymerizable double bond in the molecule.

Concrete examples of such a compound include acrylic acids such as (meth)acrylic acid; acrylic acid derivatives such as methyl (meth)acrylate, ethyl (meth)acrylate, propyl (meth)acrylate, isopropyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, cyclohexyl (meth)acrylate and benzyl (meth)acrylate; aromatic vinyl compounds such as styrene, α-methylstyrene and vinyltoluene; acrylonitrile; maleic acid derivatives such as maleic anhydride, maleimide and phenylmaleimide; and vinyl esters such as vinyl acetate and vinyl benzoate.

The polycyclic (meth)acrylate (co)polymer is a (co)polymer prepared by polymerizing polycyclic (meth)acrylate(s) and if necessary other monomers as mentioned above.

When the polycyclic (meth)acrylate (co)polymer is a copolymer of a polycyclic (meth)acrylate and other monomers, the polycyclic (meth)acrylate (co)polymer comprises recurring units derived from the polycyclic (meth)acrylate in an amount of usually at least 5 mol%, preferably 10 to 99 mol% and especially 30 to 95 mol%. A resin composition excellent in heat resistance and heat stability can be obtained by using a copolymer comprising recurring units derived from a polycyclic (meth)acrylate in an amount in the range mentioned above.

The polycyclic (meth)acrylate (co)polymer has an intrinsic viscosity [η], as measured in toluene at 30°C, of usually 0.002 to 20 dl/g, preferably 0.05 to 10 dl/g and especially 0.2 to 5 dl/g. The (co)polymer has a glass transition temperature, as measured by a differential scanning type calorimeter, of usually 10 to 200°C, preferably 50 to 200°C and especially 105 to 200°C.

Furthermore, the polycyclic (meth)acrylate (co)polymer has a molecular weight distribution (Mw/Mn) of usually not greater than 10, preferably 1.0 to 3.0, as measured by gel permeation chromatography, a crystallinity of usually not greater than 5%, preferably not greater than 1%, as measured by X-ray diffraction, and a softening temperature of usually 20 to 220°C, preferably 70 to 220°C and especially 120 to 220°C, as measured by a thermal mechanical analyzer (TMA) (manufactured by DuPont).

When the polycyclic (meth)acrylate (co)polymer is a copolymer, the copolymer has a substantially linear molecular structure in which recurring units derived from the polycyclic (meth)acrylate and recurring units derived from other selected monomers are randomly arranged. The fact that the copolymer has a substantially linear molecular structure can be proved by observing dissolution thereof in an organic solvent without leaving any insoluble-component. This can be proved, for example, by the fact that the polycyclic (meth)acrylate (co)polymer completely dissolves in toluene at 30°C during the measurement of the intrinsic viscosity [η] as described above.

The polycyclic (meth)acrylate (co)polymer can be prepared by various polymerization methods. For example, the polycyclic (meth)acrylate and other monomers can be copolymerized by polymerization methods such as suspension polymerization, emulsion polymerization, solution polymerization and bulk polymerization.

Examples of the bulk polymerization method include a method wherein the polymerization is carried out at a temperature of usually 60 to 250°C, preferably 150 to 230°C, and a method wherein the reaction temperature is elevated, for example, from 80°C, with the progress of the polymerization reaction, and the polymerization reaction is terminated, for example, at a temperature of 180 to 230°C. In these methods, radical initiators can be used. Examples of the radical initiators include organic peroxides such as di-tert-butylperoxide, dicumyl peroxide, methyl ethyl ketone peroxide, tert-butyl perphthalate, tert-butyl perbenzoate, di-tert-butyl peracetate and tert-butyl perisobutyrate, and azo compounds such as 1,1'-azobiscyclohexanecarbonitrile and 2-cyano-2-propylazoformamide. These radical initiators are used in an amount of usually not greater than 1 mol% based on the monomers.

During the (co)polymerization, there may also be used chain transfer agents such as tert-butylmercaptan, n-butylmercaptan, n-octylmercaptan and n-dodecylmercaptan in order to control the molecular weight of resultant polycyclic (meth)acrylate (co)polymer. The chain transfer agents are used in an amount of usually not greater than 1 mol% based on the monomers.

Furthermore, the aforementioned (co)polymer may also be prepared by photopolymerization using energy ray irradiation with or without the use of the radical initiator as mentioned above.

The procedures of polymerization as described above are disclosed in detail, for example, in Japanese Patent L-O-P No. 243108/1988, and can be utilized in the present invention.

### ELASTOMER

The thermoplastic resin composition of the invention comprises the polycyclic (meth)acrylate (co)polymer mentioned above and an elastomer.

The elastomer is an α-olefin polymer (ii) may be a graft-modified polymer with an α,β-unsaturated carboxylic acid or derivative thereof.

Concrete examples of the elastomer used in the invention are illustrated below.

### α-OLEFIN COPOLYMER (ii)

The α-olefin copolymer (ii) used as an elastomer is an amorphous or low crystalline copolymer prepared from at least two α-olefins. Concrete examples of the α-olefin copolymer (ii) include an ethylene/α-olefin copolymer and a propylene/α-olefin copolymer.

A graft-modified α-olefin copolymer (ii) may also be used as an elastomer.

The α-olefin from which the ethylene/α-olefin copolymer is prepared has usually 3 to 20 carbon atoms. Concrete examples of the α-olefin include propylene, butene-1,4-methylbutene-1, hexene-1, octene-1, decene-1 and a mixture of these α-olefins. Of these, preferred are α-olefins each having 3 to 10 carbon atoms.

The molar ratio of the recurring units derived from ethylene to those derived from α-olefin (ethylene/α-olefin) in the ethylene/α-olefin copolymer is usually 40/60 to 95/5, though it differs depending on the type of the α-olefin. The molar ratio is preferably 40/60 to 90/10 when propylene is used as the α-olefin, and is also preferably 50/50 to 95/5 when an α-olefin having at least 4 carbon atoms is used.

The α-olefin from which the propylene/α-olefin copolymer is prepared has usually 4 to 20 carbon atoms. Concrete examples of the α-olefin include butene-1,4-methylpentene-1, hexene-1, octene-1, decene-1 and a mixture of these α-olefins. Of these, particularly preferred are α-olefins each having 4 to 10 carbon atoms.

The molar ratio of the recurring units derived from propylene to those derived from α-olefin (propylene/α-olefin) in the propylene/α-olefin copolymer is usually 50/50 to 95/5, though it differs depending on the type of the α-olefin.

These elastomers may be incorporated singly or in combination.

### THERMOPLASTIC RESIN COMPOSITION

The thermoplastic resin composition of the invention comprises the polycyclic (meth)acrylate (co)polymer and the elastomer as described above in the proportion by weight of the (co)polymer to the elastomer of 99/1 to 40/60. The composition having the proportion in the range of 95/5 to 50/50, preferably 93/7 to 60/40, is particularly excellent in heat resistance, rigidity, dimension accuracy, impact resistance and light resistance.

The thermoplastic resin composition of the invention as described above has a melt flow rate (MFR, as measured according to ASTM D 1238) of usually 0.1 to 100.

The thermoplastic resin composition of the invention can be prepared by mixing the polycyclic (meth)acrylate (co)polymer and the elastomer as described above in a predetermined proportion, and kneading the mixture using, for example, a melt kneading apparatus.

Furthermore, the thermoplastic resin composition of the invention may be the one having a crosslinked structure among the components of the composition. For example, a crosslinked structure can be formed between the polycyclic (meth)acrylate (co)polymer and the elastomer as mentioned above by using, for example, an organic peroxide. Moreover, in forming the crosslinked structure by using such organic peroxide, the crosslinking reaction may also be conducted by incorporating such a compound having at least two polymerizable functional groups in the molecule as divinylbenzene, vinyl acrylate and vinyl methacrylate.

### OTHER ADDITIVES

The thermoplastic resin composition of the invention may be incorporated with heat stabilizers, weathering stabilizers, antistatic agents, slip agents, anti-blocking agents, anti-haze agents, lubricants, dyes, pigments, natural oil, synthetic oil, wax, organic or inorganic fillers, etc. so long as the incorporation does not impair the object of the invention.

Stabilizers to be used as optional components include, for example, phenolic antioxidants such as tetrakis[methylene-3-(3,5-di-tert-butyl-4-hydroxyphenyl)propionate]methane, alkyl β-(3,5-di-tert-butyl-4-hydroxyphenyl)propionate and 2,2'-oxamidobis[ethyl-3-(3,5-di-tert-butyl-4-hydroxyphenyl)]propionate, aliphatic acid metal salts such as zinc stearate, calcium stearate and calcium 1,2-hydroxystearate, and aliphatic acid esters of polyhydric alcohols such as glycerin monostearate, glycerin distearate, pentaerythritol monostearate, pentaerythritol distearate and pentaerythritol tristearate. These stabilizers may be used singly or in combination. For example, tetrakis[methylene-3-(3,5-di-tert-butyl-4-hydroxyphenyl)propionate]methane, zinc stearate and glycerin monostearate may be used in combination.

Useful organic or inorganic fillers include silica, diatomaceous earth, alumina, titanium oxide, magnesium oxide, pumice powder, pumice balloons, aluminum hydroxide, magnesium hydroxide, basic magnesium carbonate, dolomite, calcium sulfate, potassium titanate, barium sulfate, calcium sulfite, talc, clay, mica, asbestos, glass fibers, glass flakes, glass beads, calcium silicate, montmorillonite, bentonite, graphite, aluminum powder, molybdenum sulfide, boron fibers, silicon carbide fibers, polyethylene fibers, polypropylene fibers, polyester fibers and polyamide fibers.

These other components can be mixed with the thermoplastic resin composition of the invention by any known method. For example, each of these other components can be simultaneously mixed with the thermoplastic resin composition.

Furthermore, the thermoplastic resin composition of the invention may be incorporated with other resins so long as the incorporation does not impair the object of the invention. Examples of these other resins include polyolefins, halogen-containing vinyl polymers, poly(meth)acrylate, polyacrylamide, polyacrylonitrile, acrylonitrile/butadiene/styrene copolymer, acrylonitrile styrene copolymer, acrylonitrile/styrene/acrylic acid ester copolymers, polyvinyl alcohol, polyvinyl acetate, polyvinyl stearate, polyvinyl benzoate, polyvinyl butyral, polyallyl phthalate, polyallylmelamine, ethylene/vinyl acetate copolymer, polyethylene oxide, polyacetal, polyphenylene oxide, polycarbonate, polysulfone, polyurethane, urea resins, polyamides, polyethylene terephthalate, polybutylene terephthalate, poly-1,4-dimethylolcyclohexane terephthalate, phenol/formaldehyde resin, urea/formaldehyde resin, melamine/formaldehyde resin, unsaturated polyester resins and natural polymers.

### USE OF THERMOPLASTIC RESIN COMPOSITION

Molded articles in various forms can be prepared by using the thermoplastic resin composition of the invention, and utilizing conventional molding methods such as injection molding.

For example, molded articles in a film or sheet form can be manufactured by extrusion molding, and refrigerator interior boxes and trays can be manufactured by vacuum molding. Moreover, there can be manufactured containers for, for example, chemicals and drinks, air ducts, sun visors, consoles, automobile interiors, various toys and floats by blow molding.

Concrete examples of molded articles which can be manufactured from the thermoplastic resin composition of the invention include
(1) automobile parts:
   instrument panels, console boxes, meter clusters, column covers, grille door mirrors, bumpers, fenders, bonnets and radiators;
(2) machine housings:
   tools (e.g., electric tools), business machines (e.g., word processors, personal computers, copying machines, printers, FDD and CRT), precision instruments (e.g., cameras) and electrical appliances (e.g., electric ovens, electric rice cookers, pots and cleaners); and
(3) others:
   toys, miscellaneous goods, furniture and sports goods.

### EFFECT OF THE INVENTION

The thermoplastic resin composition of the present invention is excellent in characteristics such as rigidity, dimension accuracy, impact strength and light resistance. Accordingly, molded articles excellent in characteristics such as heat resistance, rigidity, impact strength and light resistance can be prepared from the resin composition of the invention.

### Examples

The present invention is illustrated below with reference to examples, but it should be construed that the invention is in no way limited to these examples.

Methods for measuring and evaluating various physical properties in the invention are described below.

### (1) Melt flow rate (MFR_{T})

The melt flow rate is measured according to ASTM D 1238 at a predetermined temperature of T°C under a load of 2.16 kg.

### (2) Preparation of test pieces

Test pieces are molded under the following conditions using an injection molding machine (trade name of IS-55 EPN, manufactured by Toshiba Kikai K.K.) and a mold for the test pieces:
a cylinder temperature of 270°C and a mold temperature of 90°C,
primary/secondary injection pressures of 1000/800 kg/cm², and
an injection speed (primary) of 30 mm/sec.

### (3) Flexural test

The flexural test is carried out according to ASTM D 790 under the following conditions:
the shape of the test piece: a size of 127x12.7x3.2mm (5x1/2x1/8^{t} inches) and a span of 51 mm,
a test speed of 20 mm/min, and
test temperatures of 23°C, 80°C and 100°C.

### (4) Heat Deflection Temperature (HDT)

The heat deflection temperature is measured according to ASTM D 628 under the following conditions:
a test piece size of 127x6.35x12.7 mm (5x1/4x1/2^{t} inches), and
a load of 1820 kPa (264 psi).

### (5) Softening temperature (TMA)

The softening temperature is measured by observing the heat deformation behavior of a sheet 1 mm thick using Thermo Mechanical Analyzer (trade name, manufactured by DuPont). That is, a quartz needle is placed on the sheet, and the sheet is heated at a rate of 5°C/min while a load of 49 g is applied to the needle. The TMA is a temperature at which the needle penetrates the sheet to the depth of 0.635 mm.

### (6) Glass transition temperature (Tg) and melting point (Tm)

The glass transition temperature and the melting point are measured by using DSC 20 (trade name, manufactured by SEIKO Denshi Kogyo K.K.) and heating the test piece at a rate of 10°C/min.

### (7) Rockwell hardness

The Rockwell hardness is measured at 23°C according to ASTM D 785.

### (8) Izod impact test

The Izod impact test is carried out according to ASTM D 256 under the following conditions:
a test piece (notched) size of 127x3.2x12.7 mm (5/2x1/8x1/2t inches), and
a test temperature of 23°C.

### (9) Tensile test

The tensile test is carried out according to ASTM D 638 under the following conditions:
a test piece shape: type IV,
a test speed of 50 mm/min, and
a test temperature of 23°C.

### Example 1

### [Preparation of a polycyclic (meth)acrylate polymer]

In a nitrogen atmosphere were mixed 99 parts by weight of tetracyclo[4.4.0.1^{2,5}.1^{7,10}]dodecyl-3-acrylate (TDAC), 0.05 part by weight of n-octylmercaptan (OM) and 0.05 part by weight of 2,2'-azobisisobutyronitrile (AIBN), and polymerization was carried out at 80°C for 24 hours. The resultant polymer (PTDAC) had an intrinsic viscosity [η] of 0.58 dl/g as measured in toluene at 30°C and a TMA of 138°C.

### [Preparation of a resin composition of PTDAC and an elastomer]

Eighty-five parts by weight of the thus obtained PTDAC pellets and 15 parts by weight of an ethylene/propylene random copolymer (having an ethylene structural unit content of 80 mol%, a Tg of -54°C and an intrinsic viscosity [η] of 2.2 dl/g) were sufficiently premixed. The mixture was melt blended by a twin screw extruder (trade name of PCM 45, manufactured by Ikegai Tekkosho K.K.) at a cylinder temperature of 230°C to be pelletized. Test pieces were prepared from the pellets by the above-mentioned method, and physical properties thereof were evaluated.

The results are shown in Table 1.

### Example 2

Example 1 was repeated except that an elastomer prepared by a procedure described below was used in place of the elastomer of Example 1 to obtain a resin composition. Test pieces were prepared from the resin composition.

The results are shown in Table 1.

### [Preparation of an elastomer]

To 100 parts by weight of a xylene solution (solute concentration of 100 g/liter xylene) of an ethylene/propylene random copolymer (having an ethylene content of 80 mol% and an intrinsic viscosity [η] of 2.2 dl/g as measured in decalin at 135°C) held at 80°C in a nitrogen atmosphere was added dropwise a mixture of 30 parts by weight of TDAC, 1 part by weight of OM and 1 part by weight of AIBN over a period of 8 hours. The reaction was carried out for additional 16 hours to obtain a TDAC-grafted ethylene/propylene random copolymer.

### Example 3

### [Preparation of a polycyclic (meth)acrylate polymer]

The procedure of Example 1 was repeated except that a mixture of 66 parts by weight of TDAC and 33 parts by weight of styrene was used in place of 99 parts by weight of TDAC to obtain a copolymer of TDAC and styrene (PTDAC/St). The resultant polymer had an intrinsic viscosity [η] of 0.61 dl/g as measured in toluene at 30°C and a TMA of 121°C.

### [Preparation of an elastomer]

The procedure of Example 2 was repeated except that a mixture of 20 parts by weight of TDAC and 10 parts by weight of styrene was used in place of 30 parts by weight of TDAC to obtain a TDAC/styrene-grafted ethylene/propylene random copolymer.

### [Preparation of a resin composition]

The procedure of Example 1 was repeated by using PTDAC/St and the elastomer prepared above to obtain a resin composition.

Test pieces were prepared from the resin composition, and physical properties thereof were measured.

The results are shown in Table 1.

### Examples 4 and 5.

The procedure of Example 2 was repeated except that the proportion of PTDAC to the elastomer was altered to obtain a resin composition.

Test pieces were prepared from the resin composition, and physical properties thereof were measured.

The results are shown in Table 1

**Table 1**

| Example | * (wt.parts) | Flexural modulus (kg/cm²) | Flexural strength (kg/cm²) | Tensile strength (kg/cm²) | Tensile elongation (%) | Heat Deflect. Temp. (°C) | Rockwell hardness (R-scale) | Izod impact strength (kg·cm/cm) |
|---|---|---|---|---|---|---|---|---|
| 1 | 85/15 | 22000 | 750 | 450 | 15 | 113 | 110 | 5 |
| 2 | 85/15 | 21500 | 760 | 460 | 15 | 115 | 110 | 18 |
| 3 | 85/15 | 21000 | 740 | 460 | 13 | 97 | 105 | 20 |
| 4 | 90/10 | 26500 | 800 | 530 | 10 | 115 | 115 | 10 |
| 5 | 70/30 | 16000 | 600 | 400 | 25 | 103 | 98 | 45 |

| | | | | | | | | |
|---|---|---|---|---|---|---|---|---|
| *: Polycyclic (meth)acrylate/elastomer | | | | | | | | |

## Claims

1. A thermoplastic resin composition comprising: (a) a polymer comprising recurring units derived from a polycyclic (meth)acrylate represented by formula [I] 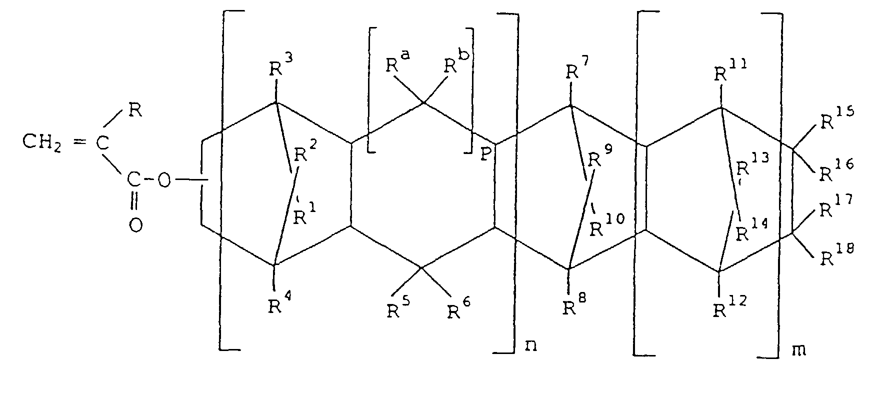 wherein m is 0 or a positive integer; n is 0 or 1; R is hydrogen or methyl; R¹-R¹⁸ are each independently hydrogen, halogen or hydrocarbon; R¹⁵-R¹⁸ may be linked together to form a monocyclic or polycyclic group which may have a double bond; R¹⁵ and R¹⁶, or R¹⁷ and R¹⁸, may form an alkylidene group; p is 0 or 1, and when p is 1 R^{a} and R^{b} are each independently hydrogen or hydrocarbon; and (b) an elastomer having a glass transition temperature (Tg) of not higher than 0°C, an intrinsic viscosity (η) as measured in decalin at 135°C of 0.01 to 10 dl/g, and a crystallinity index as measured by X-ray diffraction of 0 to 10%, which is (ii) an α-olefin polymer comprising recurring units from at least 2 α-olefins, and/or (b') an elastomer which is a graft modified copolymer of (ii); in a weight ratio of (a):((b)+(b')) of 99:1 to 40:60.

2. A composition according to claim 1 wherein said polymer (a) is a copolymer comprising said units in an amount of at least 5 mol %.

3. A composition according to claim 1 or 2 wherein said polymer (a) has an intrinsic viscosity (η) of 0.002 to 20 dl/g, as measured in toluene at 30°C.

4. A composition according to any one of the preceding claims wherein said polymer (a) has a glass transition temperature of 10 to 200°C, as measured by a differential scanning type calorimeter.

5. A composition according to any one of the preceding claims wherein said polymer (a) has a molecular weight distribution (Mw/Mn) of not greater than 10, as measured by gel permeation chromatography.

6. A composition according to any one of the preceding claims wherein said polymer (a) has a crystallinity of not greater than 5%, as measured by X-ray diffraction.

7. A composition according to any one of the preceding claims wherein said polymer (a) has a softening temperature of 20 to 220°C, as measured by a thermal mechanical analyzer.

8. A composition according to any one of the preceding claims wherein said polymer (a) is a copolymer having a substantially linear molecular structure in which units of formula [I] and units derived from at least one other monomer are randomly arranged.

9. A molded article comprising a resin composition claimed in any one of the preceding claims.

## Patentansprüche

1. Thermoplastische Harzmasse, umfassend
(a) ein Polymer, umfassend wiederkehrende Einheiten, die abgeleitet sind von einem polycyclischen (Meth)acrylat, angegeben durch die Formel [I] 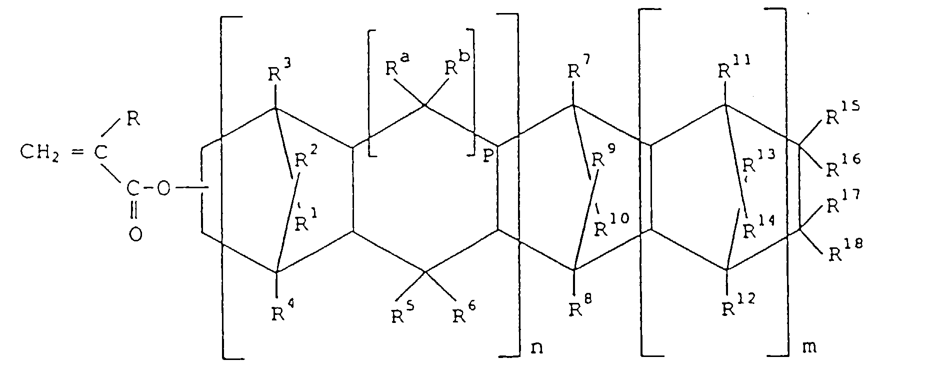 wobei m 0 oder eine positive ganze Zahl ist; n 0 oder 1 ist; R Wasserstoff oder Methyl ist; R¹-R¹⁸ jeweils unabhängig Wasserstoff oder Kohlenwasserstoff sind; R¹⁵-R¹⁸ miteinander verbunden sein können unter Bildung einer monocyclischen oder polycyclischen Gruppe, die eine Doppelbindung enthalten kann; R¹⁵ und R¹⁶ oder R¹⁷ und R¹⁸ eine Alkylidengruppe bilden können; p 0 oder 1 ist und, wenn p 1 ist, R^{a} und R^{b} jeweils unabhängig Wasserstoff oder Kohlenwasserstoff sind, und
(b) ein Elastomer mit einer Glasübergangstemperatur (Tg) von nicht mehr als 0°C, einer Grundviskosität (η), gemessen in Decalin bei 135°C, von 0,01 bis 10 dl/g und einem Kristallinitätsindex, gemessen durch Röntgenbeugung, von 0 bis 10%, das (ii) ein α-Olefinpolymer ist, umfassend wiederkehrende Einheiten von mindestens 2 α-Olefinen, und/oder
(b') ein Elastomer, das ein pfropf-modifiziertes Copolymer von (ii) ist, in einem Gewichtsverhältnis von (a) : ((b)+(b')) von 99:1 bis 40:60.

2. Masse nach Anspruch 1, wobei das Polymer (a) ein Copolymer ist, umfassend die Einheiten in einer Menge von mindestens 5 mol%.

3. Masse nach Anspruch 1 oder 2, wobei das Polymer (a) eine Grundviskosität (η), gemessen in Toluol bei 30°C, von 0,002 bis 20 dl/g hat.

4. Masse nach einem der vorangehenden Ansprüche, wobei das Polymer (a) eine Glasübergangstemperatur, gemessen mit einem Kalorimeter vom Differential-Scanner-Typ, von 10 bis 200°C hat

5. Masse nach einem der vorangehenden Ansprüche, wobei das Polymer (a) eine Molekulargewichtsverteilung (Mw/Mn), gemessen durch Gelpermeationschromatographie, von nicht mehr als 10 hat.

6. Masse nach einem der vorangehenden Ansprüche, wobei das Polymer (a) eine Kristallinität, gemessen durch Röntgenbeugung, von nicht mehr als 5% hat.

7. Masse nach einem der vorangehenden Ansprüche, wobei das Polymer (a) eine Erweichungstemperatur, gemessen mit einem thermisch-mechanischen Analysator, von 20 bis 220°C hat.

8. Masse nach einem der vorangehenden Ansprüche, wobei das Polymer (a) ein Copolymer mit einer im wesentlichen linearen Molekularstruktur ist, wobei Einheiten der Formel [I] und Einheiten, die von mindestens einem anderen Monomer abgeleitet sind, statistisch angeordnet sind.

9. Formkörper, umfassend eine Harzmasse nach einem der vorangehenden Ansprüche.

## Revendications

1. Composition de résine thermoplastique comprenant :
(a) un polymère qui comprend des motifs récurrents dérivés d'un (méth)acrylate polycyclique répondant à la formule [I] : 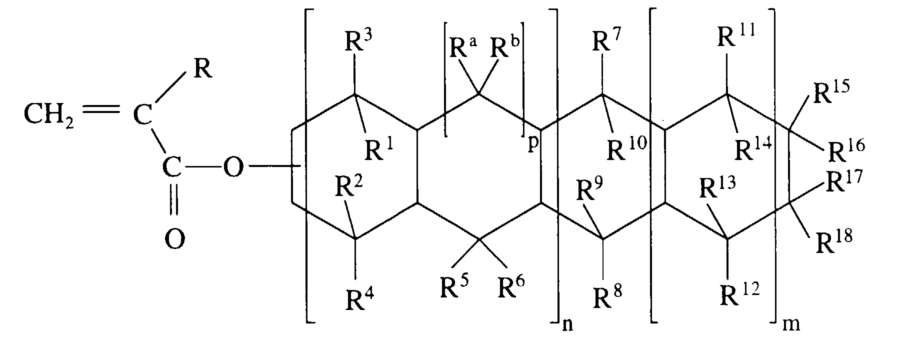 dans laquelle m vaut 0 ou un nombre entier positif ; n vaut 0 ou 1 ; R représente un atome d'hydrogène ou un groupe méthyle ; R¹ à R¹⁸ représentent chacun un atome d'hydrogène, un atome d'halogène ou un groupe hydrocarbyle ; R¹⁵ à R¹⁸ peuvent être liés ensemble pour former un groupe polycyclique ou monocyclique qui peut comporter une double liaison ; R¹⁵ et R¹⁶, ou R¹⁷ et R¹⁸ peuvent former un groupe alkylidène ; p vaut 0 ou 1 et quand p vaut 1, R^{a} et R^{b} représentent chacun indépendamment un atome d'hydrogène ou un groupe hydrocarbyle ; et
(b) un élastomère qui présente une température de transition vitreuse (Tᵥ) qui n'est pas supérieure à 0 °C, une viscosité intrinsèque (η), telle que mesurée dans la décaline à 135 °C, de 0,01 à 10 dl/g et un indice de cristallinité, tel que mesuré par diffraction des rayons X, de 0 à 10 %, qui est (ii) un polymère d'α-oléfine comprenant des motifs récurrents d'au moins deux α-oléfines ; et/ou
(b') un élastomère qui est un copolymère modifié de (ii) par greffage ,
en un rapport pondéral de (a):[(b) + (b')] allant de 99:1 à 40:60.

2. Composition selon la revendication 1, dans laquelle ledit polymère (a) est un copolymère comprenant lesdits motifs en une quantité d'au moins 5 % en moles.

3. Composition selon la revendication 1 ou 2, dans laquelle ledit polymère (a) présente une viscosité intrinsèque (η) de 0,002 à 20 dl/g, telle que mesurée dans le toluène à 30 °C.

4. Composition selon l'une quelconque des précédentes revendications, dans laquelle ledit polymère (a) présente une température de transition vitreuse, telle que mesurée par analyse calorimétrique différentielle, de 10 à 200 °C.

5. Composition selon l'une quelconque des précédentes revendications, dans laquelle ledit polymère (a) présente un indice de polydispersité (Mp/Mn), tel que mesuré par chromatographie par perméation de gel, qui n'est pas supérieur à 10.

6. Composition selon l'une quelconque des précédentes revendications, dans laquelle ledit polymère (a) présente un indice de cristallinité, tel que mesuré par diffraction des rayons X, qui n'est pas supérieur à 5 %.

7. Composition selon l'une quelconque des précédentes revendications, dans laquelle ledit polymère (a) présente une température de ramollissement, telle que mesurée par un dispositif d'analyse mécanique thermique, de 20 à 220 °C.

8. Composition selon l'une quelconque des précédentes revendications, dans laquelle ledit polymère (a) est un copolymère présentant une structure moléculaire pratiquement linéaire dans laquelle les motifs de formule [I] et les motifs dérivés d'au moins un autre monomère sont statistiquement arrangés.

9. Article moulé comprenant une composition de résine selon l'une quelconque des précédentes revendications.
